# EUROPÄISCHE PATENTANMELDUNG

(11) **EP 3 421 209 A1**
(43) Veröffentlichungstag der Anmeldung: **02.01.2019**
(21) Anmeldenummer: 17001807.1
(22) Anmeldetag: 06.11.2017
(51) Int. Cl.: B29C 33/30, B29C 33/00, E04G 3/00, B29C 37/00

(54) **MODUL FÜR EIN LAUFGESTELL**

(30) Priorität: 16.11.2016 DE 102016013637
(71) Anmelder: Carbon Rotec GmbH & Co. KG, 27809 Lemwerder (DE)
(72) Erfinder: Jaquemotte, Klaus-Peter, 26655 Westerstede (DE); Klein, Alexander, 28239 Bremen (DE)
(74) Vertreter: Heiland, Karsten

(57) **Zusammenfassung**

Die Erfindung betrifft ein Modul für ein Laufgestell (17) zur seitlichen Befestigung an Formgestellen (11) oder Formen (10) für Rotorblätter oder Rotorblattteile.

## Beschreibung

Die Erfindung betrifft ein Modul für ein Laufgestell zur seitlichen Befestigung an Formen für Rotorblätter oder Teile derselben.

Rotorflügel für Windkraftanlagen werden aus mehreren miteinander zu verbindenden Teilen hergestellt, etwa mit zwei Halbschalen für Saugseite und Druckseite oder aus drei Schalen für Vorderkante, Mittelbereich und Hinterkante. Die einzelnen Teile werden in Formen gefertigt. Glasfasermatten oder ein anderes Verstärkungsmaterial werden in die Form eingelegt und mit Epoxidharz oder einem anderen Matrixmaterial vergossen. Die zur Fertigung verwendeten Formen nehmen die zu fertigenden Teile liegend auf und können sich über die Länge des Rotorflügels erstrecken. Für unterschiedliche Rotorblatttypen werden unterschiedliche Formen verwendet. Die Formen können freistehen bzw. liegen oder in Formgestellen gehalten sein.

Jede Form ist mit einem Laufgestell versehen, welche das Arbeiten an der Form ermöglicht. Der Verlauf des Laufgestells folgt der Kontur der Form. Entsprechend ist jedes Laufgestell eine Sonderanfertigung für die betreffende Form. Das Laufgestell steht typischerweise eigenständig seitlich neben der Form oder dem Formgestell und ist im Boden verankert. Dabei ist das Laufgestell in der Regel weder wiederverwendbar, noch transportabel oder mit geringem Volumen lagerfähig. Auch ist der Raumbedarf relativ hoch, da das Laufgestell bis zum Boden hinabreicht.

Aufgabe der Erfindung ist die Möglichkeit zur Schaffung eines platzsparenden, wiederverwendbaren und/oder transportablen Laufgestells.

Zur Lösung der Aufgabe ist ein Modul für ein Laufgestell zur seitlichen Befestigung an Formgestellen oder Formen für Rotorblätter vorgesehen. Schon die Ausbildung des Laufgestells aus Modulen einerseits und zur seitlichen Befestigung andererseits bietet deutliche Vorteile gegenüber den bisher verwendeten Laufgestellen. So können die Module standardisiert ausgebildet und preiswert zu fertigen sein. Die seitliche Befestigung der Module an Formgestellen oder Formen verringert außerdem deutlich die Bauhöhe der Module und ermöglicht die Nutzung des Raumes unterhalb des Laufgestells. Bestandteile eines jeden Moduls können mit einem benachbarten Modul und/oder mit dem Formgestell oder der Form lösbar verbunden ist. Auch kann das Modul selbst vorzugsweise lösbar mit dem Formgestell oder der Form verbindbar und/oder zerlegbar sein.

Nach einem weiteren Gedanken der Erfindung weist das Modul jeweils ein oder mehrere Bodenelemente, Tragarmhalter und Tragarme auf, wobei die Tragarme die Bodenelemente tragen, und wobei
- die Tragarme an den Tragarmhaltern schwenkbar sind,
   und/oder
- die Bodenelemente um die Tragarme schwenkbar sind.

Die Schwenkbarkeit der Tragarme bzw. Bodenelemente ermöglicht eine einfache Anpassung in Laufrichtung aufeinanderfolgender Module an die Kontur der Form. Dabei genügen bereits geringe Schwenkbereiche von vorzugsweise 10 Grad, insbesondere bis zu 5 Grad. Je nach Kontur der betreffenden Form reicht eine Schwenkbarkeit der Tragarme oder der Bodenelemente aus. Größere Flexibilität und Anpassungsfähigkeit ist gegeben, wenn sowohl die Tragarme als auch die Bodenelemente schwenkbar sind.

Nach einem weiteren Gedanken der Erfindung sind die Tragarme um eine im Wesentlichen vertikale Achse schwenkbar, wobei hierzu die Tragarmhalter oder Tragarme insbesondere eine im Wesentlichen vertikal gerichtete Schwenkwelle aufweisen. So kann die Schwenkwelle insbesondere im Tragarmhalter drehbar gelagert und zugleich mit dem Tragarm fest verbunden sein.

Nach einem weiteren Gedanken der Erfindung sind übereinander mit Abstand zwei oder mehr Tragarmhalter vorgesehen, wobei beide Tragarmhalter mit dem Tragarm verbunden sind, etwa über eine oder mehrere Schwenkwellen. Durch die Verbindung mit zwei Tragarmhaltern ist die Konstruktion insgesamt stabiler und ermöglicht eine genauere Führung der Schwenkbewegung. Dabei können die Tragarmhalter auch miteinander verbunden sein, etwa durch einen aufrechten Träger.

Nach einem weiteren Gedanken der Erfindung sind die Tragarme wenigstens mit einer Horizontalstrebe ausgebildet, insbesondere auch mit einer Diagonalstrebe, vorzugsweise in einer gemeinsamen aufrechten Ebene, derart, dass die Diagonalstrebe die Horizontalstrebe abstützt. Dabei können Horizontalstrebe und Diagonalstrebe jeweils an eigenen Tragarmhaltern gehalten sein.

Nach einem weiteren Gedanken der Erfindung sind Verbindungsstücke zur Verbindung der Bodenelemente mit den Tragarmen vorgesehen, wobei die Verbindungsstücke vorzugsweise um die Tragarme schwenkbar sind. Vorzugsweise sind die Verbindungsstücke mit den Bodenelementen fest aber lösbar verbunden. Auch sind die Verbindungsstücke vorzugsweise auf den Tragarmen fixierbar. Entsprechend der Ausrichtung der Tragarme sind die Verbindungsstücke vorzugsweise um eine horizontale Achse schwenkbar. Insbesondere handelt es sich bei den Verbindungsstücken um auf den Tragarmen gehaltene Schellen.

Vorteilhafterweise sind die Verbindungsstücke auf Horizontalstreben der Tragarme gehalten. Die Bodenelemente können auf den Tragarmen aufliegen und zugleich durch die Verbindungsstücke fixiert sein.

Nach einem weiteren Gedanken der Erfindung sind in Laufrichtung mit Abstand zueinander zwei oder mehr Tragarmhalter vorgesehen. Ein Bodenelement kann stabil auf zwei Tragarmhaltern aufliegen.

Nach einem weiteren Gedanken der Erfindung ist vorgesehen, dass die Bodenelemente an je mindestens zwei Tragarmen gehalten sind oder auf mindestens zwei Tragarmen aufliegen. Längere Bodenelemente können auch auf drei oder mehr Tragarmen aufliegen.

Nach einem weiteren Gedanken der Erfindung sind die Tragarmhalter je zur Aufnahme von ein oder zwei Tragarmen oder Teilen von ein oder zwei Tragarmen vorgesehen. So kann ein Tragarmhalter zwei vertikale Schwenkwellen nebeneinander aufnehmen. Auch kann so der Übergang von einem Bodenelement zum nächsten Bodenelement in Laufrichtung sicher hergestellt werden.

Nach einem weiteren Gedanken der Erfindung sind die Tragarmhalter mit einem Formgestell oder einer Form verbindbar, insbesondere lösbar. Die Verbindung kann durch Schweißen, Schrauben, Nieten, Kleben oder dergleichen erfolgen.

Nach einem weiteren Gedanken der Erfindung weisen die Bodenelemente Bodenplatten und insbesondere Seitenwangen auf. Die Seitenwangen können als Abrollsicherung dienen. Eine Seitenwange ist dem Formgestell zugewandt und eine andere Seitenwange ist dem Formgestell abgewandt. Spalte zwischen Bodenelementen können durch Übergangsplatten/Querschienen abgedeckt sein.

Nach einem weiteren Gedanken der Erfindung ist ein Geländer vorgesehen, welches vorzugsweise mit dem Bodenelement und/oder den Tragarmen verbunden ist. Das Geländer dient als Personensicherung.

Erfindungsgemäße Module können Bestandteile eines erfindungsgemäßen Laufgestells sein. Letzteres kann mit einem Formgestell oder einer Form, insbesondere für die Herstellung von Rotorblättern oder Rotorblattteilen, verbunden sein. Entsprechend richten sich die Ansprüche 14, 15 und 16 auf ein Laufgestell, ein Formgestell und eine Form.

Weitere Merkmale der Erfindung ergeben sich aus der Beschreibung im Übrigen und aus den Patentansprüchen. Vorteilhafte Ausführungsformen der Erfindung werden nachfolgend anhand von Zeichnungen näher erläutert. Es zeigen:
- Fig. 1: eine perspektivische Darstellung einer Form mit Formgestell und Laufgestell,
- Fig. 2: eine vergrößerte Darstellung von Formgestell und Laufgestell,
- Fig. 3: eine perspektivische Unteransicht des Laufgestells,
- Fig. 4: zwei benachbarte Bodenelemente des Laufgestells von unten.

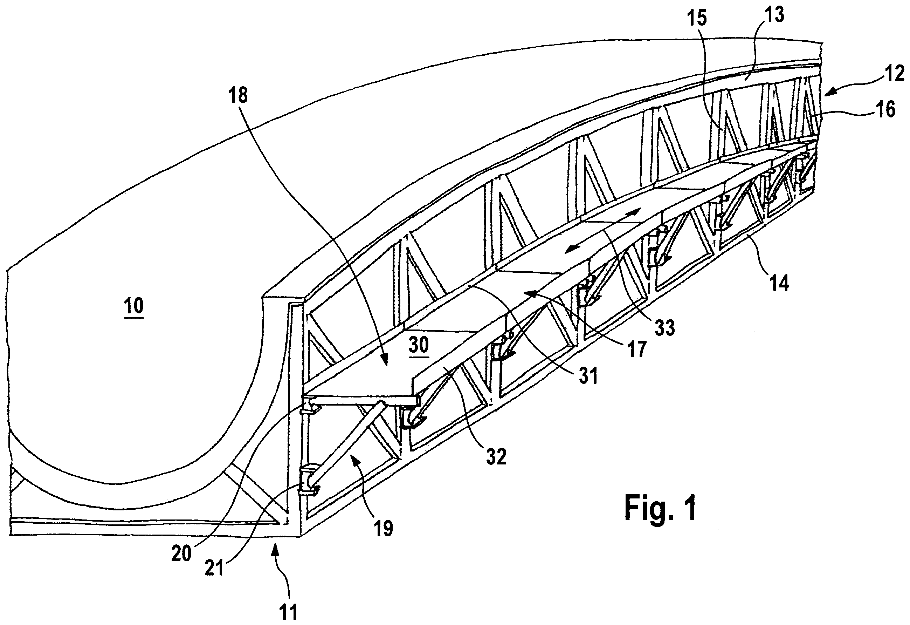

In Fig. 1 ersichtlich ist eine Form 10 für die Herstellung eines Teils eines Rotorflügels für eine Windkraftanlage. Die Form 10 ist gehalten in einem Formgestell 11, welches einen seitlichen aufrechten Bereich 12 aus Horizontalträgern 13, 14, Vertikalträgern 15 und Diagonalträgern 16 aufweist.

Am Formgestell 11 ist seitlich, also am seitlichen Bereich 12, ein Laufgestell 17 montiert. Dieses besteht hier aus Bodenelementen 18, Tragarmen 19 und Tragarmhaltern 20, 21.

Alternativ kann die Form 10 auch ohne Formgestell 11 ausgebildet sein. Das Laufgestell 17 ist dann unmittelbar an der Form 10 gehalten.

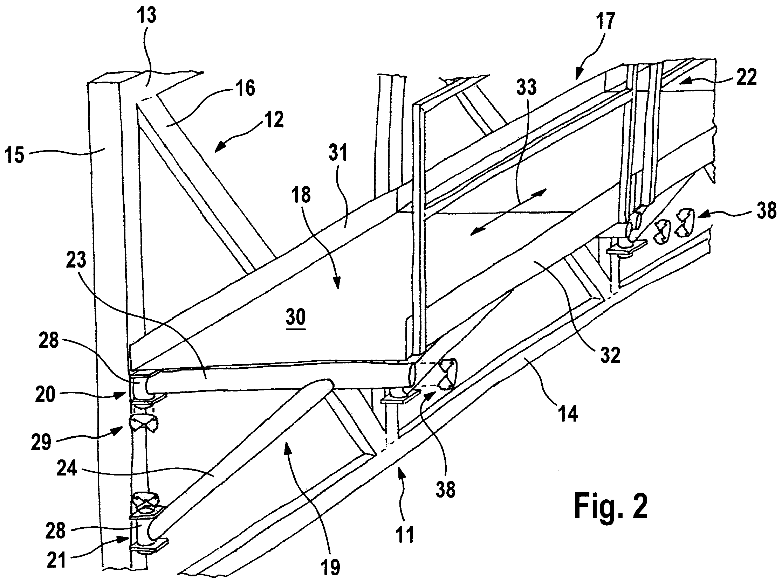

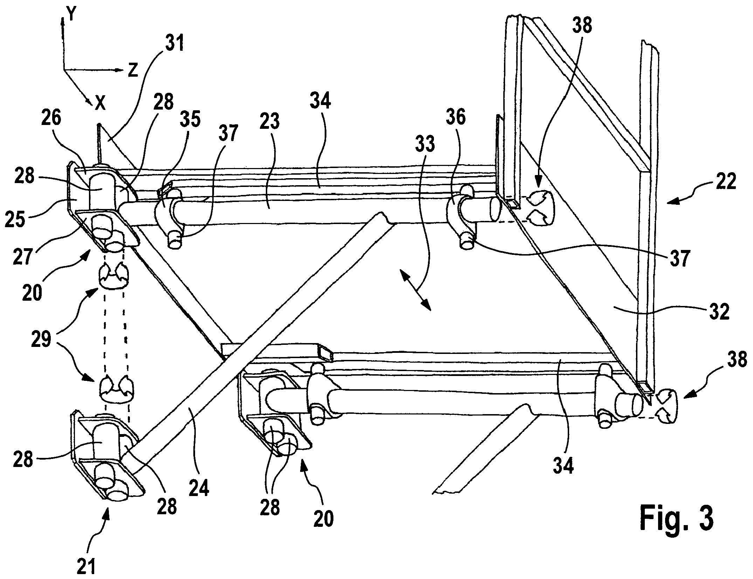

In den Fig. 2 und 3 ist außerdem ein Geländer 22 an einer dem seitlichen Bereich 12 gegenüberliegenden Seite des Laufgestells 17 gezeichnet.

Die Tragarme 19 sind gebildet aus einer mit dem oberen Tragarmhalter 20 verbundenen Horizontalstrebe 23 und einer mit dem unteren Tragarmhalter 21 verbundenen Diagonalstrebe 24. Letztere ist außerdem mit einem Ende mit einem mittigen Bereich der Horizontalstrebe 23 verbunden und stützt diese dadurch ab.

Die Tragarmhalter 20, 21 sind vorzugsweise mit den Vertikalträgern 15 verschraubt oder verschweißt und weisen eine Anlageplatte 25, eine obere Lagerplatte 26, eine untere Lagerplatte 27 und wenigstens eine zwischen den Lagerplatten 26, 27 gehaltene, kurze Welle 28 auf, siehe insbesondere Fig. 3. Die dort gezeigten Tragarmhalter 20, 21 weisen zwei Wellen 28 nebeneinander auf und sind entsprechend zur Anbindung von zwei Tragarmen 19 geeignet bzw. vorgesehen. Zur Vereinfachung ist in Fig. 3 aber nur ein Tragarm 19 je Tragarmhalter 20 eingezeichnet. Aufgrund ihrer Lagerung sind die Wellen 28 um eine vertikale Achse drehbar, siehe Pfeile 29. Horizontalstrebe 23 und Diagonalstrebe 24 sind fest mit den ihnen zugeordneten Wellen 28 verbunden.

Die Bodenelemente 18 weisen jeweils eine Bodenplatte 30, eine der Form 10 zugewandte, innere Seitenwange 31 und eine von der Form 10 abgewandte, äußere Seitenwange 32 auf. Durch die aufeinander folgenden Bodenelemente 18 ist eine Laufrichtung definiert, siehe Doppelpfeil 33. Die Bodenelemente 18 können unterseitig noch Querträger 34 aufweisen, in Laufrichtung an beiden Enden. Die Querträger 34 sind zur Verbindung mit den Tragarmen 19 vorgesehen. Hierzu weisen die Horizontalstreben 23 nahe dem Tragarmhalter 20 einerseits und an einem freien Ende andererseits Schellen 35, 36 auf. Jede Schelle 35, 36 ist über einen Bolzen 37 mit dem Querträger 34 oder der Bodenplatte 30 fest verbindbar. Zugleich kann der Bolzen 37 dazu vorgesehen sein, die Weite der betreffenden Schelle 35, 36 einzustellen und so Reibschluss mit der Horizontalstrebe 23 herzustellen. Aufgrund der Schellen 35, 36 sind die Bodenelemente 18 um die Horizontalstreben 23 bzw. die Tragarme 19 schwenkbar, siehe Pfeile 38, und in einer gewünschten Position fixierbar.

Aufgrund der beschriebenen Beweglichkeit (Pfeile 29, 38) kann die Ausrichtung der Bodenelemente 18 an den Verlauf der Form 10 angepasst werden, auch wenn die einzelnen Bodenelemente 18 standardisiert bzw. in gleicher Größe und Form ausgebildet sind, ebenso die Tragarme 19 und Tragarmhalter 20, 21. Die zu berücksichtigenden Krümmungen der Form 10 sind relativ gering, so dass entsprechend geringe Abweichungen von einer streng geradlinigen Anordnung der Bodenelemente 18 auftreten.

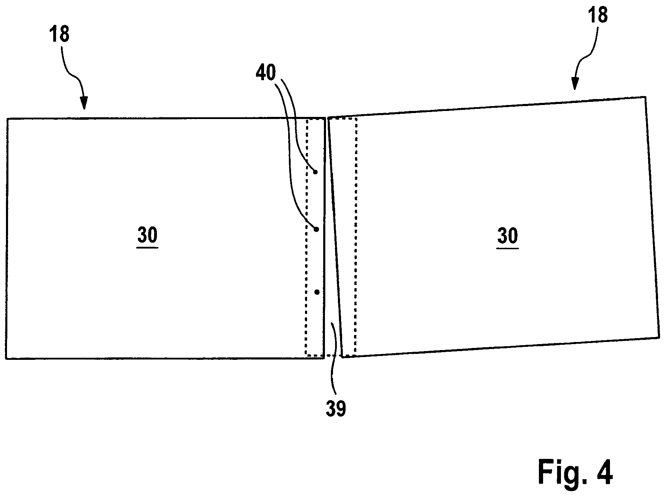

Sinnvoll sind allenfalls kleine Abstände zwischen den Bodenelementen 18, die durch Querschienen 39 als Übergangsplatten überbrückt werden und die Abwinkelungen der Bodenelemente 18 ermöglichen, siehe Fig. 4. Dort sind zwei Bodenelemente 18 von ihrer Unterseite gezeigt. Die Querschiene 39 liegt oberseitig auf, erstreckt sich über nahezu die volle Breite der Bodenplatten 30 und kann einseitig (wie in Fig. 4) oder zweiseitig (nicht gezeigt) durch Schrauben 40 oder andere Verbindungsmittel mit der jeweils überlappten Bodenplatte 30 verbunden werden.

Die Kombination aus einem Bodenelement 18, zwei Tragarmen 19 und einer entsprechenden Anzahl an Tragarmhaltern 20, 21 bildet jeweils ein Modul des Laufgestells 17. Mehrere dieser Module können zu einem Laufgestell zusammengefügt werden.

Die Figuren zeigen noch eine Besonderheit. Die Tragarmhalter 20, 21 sind hier für die Aufnahme von je zwei Tragarmen 19 vorgesehen. Das Laufgestell weist n Bodenelemente, 2*n Tragarme und n+1 obere Tragarmhalter 20 (und n+1 untere Tragarmhalter 21) auf. Von den n+1 Tragarmhaltern 20 sind n-1 Doppelhalter (wie in Fig. 3) und 2 Einfachhalter (wie in Fig. 1, 2 vorn im Bild). An Stelle der Einfachhalter können auch nur einfach belegte Doppelhalter (wie in Fig. 3) vorgesehen sein. Sofern ausschließlich Einfachhalter vorgesehen sind, müssen entsprechend mehr Tragarmhalter 20, 21 angesetzt werden.

Bei Verwendung längerer Bodenelemente 18 können auch mehr als zwei Tragarme 19 je Bodenelement vorgesehen sein.

Das Geländer 22 ist außenseitig mit den Bodenelementen 18 verbunden, insbesondere verschraubt oder verschweißt, etwa mit den äußeren Seitenwangen 32.

**Bezugszeichenliste:**

| | | | |
|---|---|---|---|
| 10 | Form | 36 | Schelle |
| 11 | Formgestell | 37 | Bolzen |
| 12 | seitlicher Bereich | 38 | Pfeile |
| 13 | Horizontalträger | 39 | Querschiene |
| 14 | Horizontalträger | 40 | Schrauben |
| 15 | Vertikalträger | | |
| 16 | Diagonalträger | | |
| 17 | Laufgestell | | |
| 18 | Bodenelemente | | |
| 19 | Tragarme | | |
| 20 | oberer Tragarmhalter | | |
| 21 | unterer Tragarmhalter | | |
| 22 | Geländer | | |
| 23 | Horizontalstrebe | | |
| 24 | Diagonalstrebe | | |
| 25 | Anlageplatte | | |
| 26 | obere Lagerplatte | | |
| 27 | untere Lagerplatte | | |
| 28 | Welle | | |
| 29 | Pfeile | | |
| 30 | Bodenplatte | | |
| 31 | innere Seitenwange | | |
| 32 | äußere Seitenwange | | |
| 33 | Doppelpfeil | | |
| 34 | Querträger | | |
| 35 | Schelle | | |

## Patentansprüche

1. Modul für ein Laufgestell (17) zur seitlichen Befestigung an Formgestellen (11) oder Formen (10) für Rotorblätter oder Teile von Rotorblättern.

2. Modul nach Anspruch 1, **gekennzeichnet durch** jeweils ein oder mehrere Bodenelemente (18), Tragarmhalter (20, 21) und Tragarme (19), wobei die Tragarme (19) die Bodenelemente (18) tragen, und wobei
- die Tragarme (19) an den Tragarmhaltern (20, 21) schwenkbar sind,
und/oder
- die Bodenelemente (18) um die Tragarme (19) schwenkbar sind.

3. Modul nach Anspruch 2, **dadurch gekennzeichnet, dass** die Tragarme (19) um eine im Wesentlichen vertikale Achse schwenkbar sind, und dass hierzu die Tragarmhalter (20, 21) oder Tragarme (19) insbesondere eine im Wesentlichen vertikal gerichtete Schwenkwelle (28) aufweisen.

4. Modul nach Anspruch 2 oder 3, **dadurch gekennzeichnet, dass** übereinander mit Abstand zwei oder mehr Tragarmhalter (20, 21) vorgesehen sind, und dass beide Tragarmhalter (20, 21) mit dem Tragarm (19) verbunden sind.

5. Modul nach Anspruch 2 oder einem der weiteren Ansprüche, **dadurch gekennzeichnet, dass** die Tragarme (19) wenigstens mit einer Horizontalstrebe (23) ausgebildet sind, insbesondere auch mit einer Diagonalstrebe (24), verzugsweise in einer gemeinsamen aufrechten Ebene, derart, dass die Diagonalstrebe (24) die Horizontalstrebe (23) abstützt.

6. Modul nach Anspruch 2 oder einem der weiteren Ansprüche, **gekennzeichnet durch** Verbindungsstücke (Schellen 35, 36) zur Verbindung der Bodenelemente (18) mit den Tragarmen (19), wobei die Verbindungsstücke um die Tragarme (19) schwenkbar sind.

7. Modul nach Anspruch 6, **dadurch gekennzeichnet, dass** die Verbindungsstücke auf Horizontalstreben (23) der Tragarme (19) gehalten sind.

8. Modul nach Anspruch 2 oder einem der weiteren Ansprüche, **dadurch gekennzeichnet, dass** in Laufrichtung (Doppelpfeil 33) mit Abstand zueinander zwei oder mehr Tragarmhalter (20, 21) vorgesehen sind.

9. Modul nach Anspruch 2 oder einem der weiteren Ansprüche, **dadurch gekennzeichnet, dass** die Bodenelemente (18) an je mindestens zwei Tragarmen (19) gehalten sind oder auf mindestens zwei Tragarmen (19) aufliegen.

10. Modul nach Anspruch 2 oder einem der weiteren Ansprüche, **dadurch gekennzeichnet, dass** die Tragarmhalter (20, 21) je zur Aufnahme von ein oder zwei Tragarmen (19) oder Teilen von ein oder zwei Tragarmen (19) vorgesehen sind.

11. Modul nach Anspruch 2 oder einem der weiteren Ansprüche, **dadurch gekennzeichnet, dass** die Tragarmhalter (20, 21) mit einem Formgestell oder einer Form (10) verbindbar sind, insbesondere lösbar.

12. Modul nach Anspruch 2 oder einem der weiteren Ansprüche, **dadurch gekennzeichnet, dass** die Bodenelemente (18), Bodenplatte (30) und insbesondere Seitenwangen (31, 32) aufweisen.

13. Modul nach Anspruch 2 oder einem der weiteren Ansprüche, **gekennzeichnet durch** ein Geländer (22), welches vorzugsweise mit den Bodenelementen (18) und/oder den Tragarmen (19) verbunden ist.

14. Laufgestell (17) mit einem oder mehreren Modulen nach einem der voranstehenden Ansprüche.

15. Formgestell (11) zur Aufnahme einer Form (10), insbesondere für die Herstellung von Rotorblättern oder Rotorblattteilen, **gekennzeichnet durch** ein Laufgestell (17) nach Anspruch 14.

16. Form (10), insbesondere für die Herstellung von Rotorblättern oder Rotorblattteilen, **gekennzeichnet durch** ein Laufgestell (17) nach Anspruch 14.
